(19) Europäisches Patentamt
European Patent Office
Office européen des brevets

(11) EP 2 118 258 B1

# (12) EUROPEAN PATENT SPECIFICATION

(45) Date of publication and mention of the grant of the patent:
**17.09.2014 Bulletin 2014/38**

(21) Application number: **08700386.9**

(22) Date of filing: **25.01.2008**

(51) Int Cl.:
***C12G 3/08*** (2006.01) ***C12G 1/00*** (2006.01)
***C12C 5/02*** (2006.01) ***A23L 1/0524*** (2006.01)
***A23L 2/70*** (2006.01)

(86) International application number:
**PCT/AU2008/000090**

(87) International publication number:
**WO 2008/092190 (07.08.2008 Gazette 2008/32)**

## (54) CALCIUM REDUCING AGENTS AND METHODS

CALCIUM REDUZIERENDE MITTEL UND VERFAHREN

AGENTS ET PROCÉDÉS DE RÉDUCTION DU CALCIUM

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **31.01.2007 AU 2007900442 P**

(43) Date of publication of application:
**18.11.2009 Bulletin 2009/47**

(73) Proprietor: **CARLTON AND UNITED BEVERAGES LIMITED**
**Southbank, VIC 3006 (AU)**

(72) Inventors:
- **DUAN, David, W**
**Abbotsford, Victoria 3067 (AU)**
- **ROGERS, Peter, J**
**Abbotsford, Victoria 3067 (AU)**
- **WILKES, Eric**
**Abbotsford, Victoria 3067 (AU)**

(74) Representative: **Høiberg, Susanne**
**Høiberg A/S**
**St. Kongensgade 59 A**
**1264 Copenhagen K (DK)**

(56) References cited:
**WO-A2-2006/032088**
**GB-A- 555 089**
**GB-A- 571 368**
**US-A- 2 419 930**
**US-A- 5 567 451**

- **Anonymous: "Pectin" Wikipedia XP002567848 Retrieved from the Internet: URL:http: //en.wikipedia.org/wiki/Pectin> [retrieved on 2010-02-10]**
- **'The Merck Index', vol. 13TH ED., 2001, WHITEHOUSE STATION, MERCK & CO., NJ**
- **DATABASE FSTA [Online] POSTNAYA A.N. ET AL., XP003018781 Database accession no. (82-1-11-h1721) & SADOVODSTVO, VINOGRADARSTVO I VINODELIE MOLDAVII vol. 36, no. 7, 1981, pages 36 - 39**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 118 258 B1

## Description

### Field

The present invention relates to agents and methods for reducing calcium in beverages, in particular alcoholic and fermented beverages such as wine, beer, larger, ale, cider and perry.

### Background

Clarity and stability of bottled sparking wine is a key issue with regard to consumer preference. High calcium concentration in wine sometimes causes calcium tartrate precipitation after bottling during storage and transportation. Factors affecting the precipitation include temperature, organic acids and ethanol levels.

It is generally agreed that most calcium in wine originates from the grape juice. It has also been found that changes in climate and weather can markedly influence calcium concentration in-both grape juice and wine. Addition of sodium bentonite during heat stabilisation is a bigger contrubutor of calcium tartrate instability. Sparking wines seem especially prone to this problem.

Currently most wineries use cold stabilization to remove excess potassium tartrate from wine. This process is of limited effects in the removal of calcium bitartrate. There may be more than 100 mg/L of calcium still remaining after the treatment. DL-tartaric acid can be used to reduce wine calcium level. However, the addition of DL-tartaric acid is expensive and may have an organoleptic effect.

### Summary

The inventors have found that pectin, a plant non-allergenic polysaccharide, can be added to beverages to reduce calcium. Without wishing to be bound by theory, it is believed that the addition of pectin to beverages causes the formation of a pectin-calcium complex as shown below which subsequently results in a reduction of calcium.

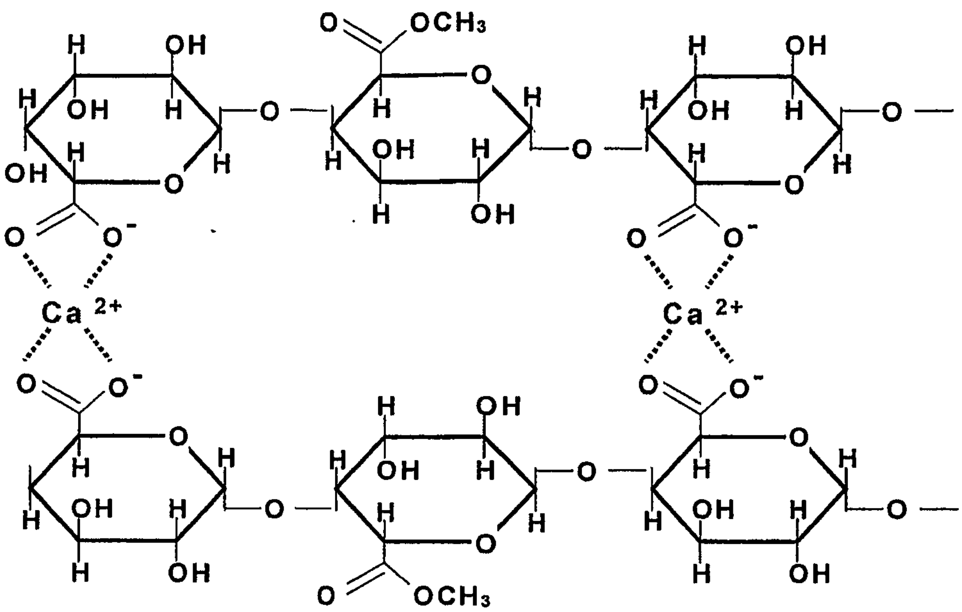

According to the present invention there is provided an agent comprising a pectin in a powder form or a salt thereof for reducing calcium in a beverage.

The present invention also provides use of a pectin in a powder form or a salt thereof as an agent for reducing calcium in a beverage.

Further according to the present invention there is provided a method for reducing calcium in a beverage which comprises adding a pectin in a powder form or a salt thereof to the beverage.

The present invention further provides a beverage which has undergone calcium reduction using a pectin in a powder form or a salt thereof.

## Detailed Description

The present invention provides agents and methods for reducing calcium in beverages which involve the use of a pectin in a powder form or a salt thereof.

### Pectins

Pectins are polysaccharides having gelling properties, which are found in variable amounts in the primary cell walls and intercellular tissues of many plants. They are most abundant in fruits and vegetables, especially in the rinds of citrus fruits.

Low methyl ester or low methoxy (LM) pectins are defined as those with a degree of esterification (DE) of 50% or less. This group of pectins is divided into two sub-groups, i.e. conventional low methyl ester (LMC) pectin and amidated, low methyl ester (LMA) pectins. Both sub-groups are characterised by their ability to form gels in systems with low solids content and a wide pH range. Both types form gels in the presence of calcium. The DE (degree of esterification) and DA (degree of amidation) of pectins have an influence on the ability of pectins to form gels, since DE and DA determine the calcium reactivity of pectins.

LMA pectins are generally used to assist gelation in low-sugar fruit preparations, particularly in low-sugar jams and jellies. They are calcium sensitive and are consequently able to gel as a result of the calcium content in fruit. LMC pectins are more calcium reactive than LMA pectins. LMC pectins are used in fruit yoghurt, ice cream ripple and similar products.

LM pectin is the partial methyl ester of 1,4-linked poly-alpha-D-galacturonic acid. The structure is complicated however by interruption with single 1,2-alpha-L-rhamnose residues. LM pectins will form firm calcium gels and the method of cross linking can be considered in terms of the 'egg-box' model, which requires cooperative binding of calcium ions between aligned polygalacturonate ribbons. The affinity towards calcium can be modified by amidation of the acid groups and by esterification - by changing charge and charge distribution. The affinity of pectin in solution will also be affected by pH, temperature and the concentration of sugars and macromolecules in solution.

Pectins with a DE of 50% or more are known as high methyl ester (HM) pectins and are capable of forming gels in aqueous systems with high contents of soluble solids and low pH values. The higher the DE, the lower the amount of soluble solids required and the higher the pH value at which gels can be formed.

HM pectins are used to achieve gel formation in fruit-based systems with high contents of solid and low pH values. Gels made with HM pectins have a firm and short structure and are clear and transparent with excellent flavour release. Such gels are not shear-reversible or heat-reversible. HM pectins are also widely used in acidified milk products due to their protein stabilising effect at a low pH.

Due to their ability to bind calcium, LM pectins are preferred. LM pectins have a DE of 50% or less, preferably 0-45%, more preferably 10-30%

The pectins used in the agents and methods of the present invention may be commercially available and obtained "off the shelf" or prepared by the conventional processes of de-esterification or amidation of naturally occurring pectins, e.g. fruit pectins such as apple or citrus pectins, or root or tuber pectins such as beet, carrot or potato pectins, or sunflower pectins.

Commercially available pectins are termed "standardised pectins" which are sugar blended pectins that often contain about 20-50% sugars. Pectins without any added sugar are referred to as "active pectins". When referred to herein, the concentration of pectin in a calcium reducing agent, unless otherwise noted, refers to the concentration of standardised pectins, i.e. including any sugars. It will be appreciated that natural and modified pectins may be used in the agents and methods of the present invention. The pectins may be in the form of pectin salts such as metal salts for example alkali metal salts, in particular a sodium or potassium salt.

Pectins having a DE which is less than 10% are often converted to their sodium salts to increase their water solubility. This can result in a high sodium concentration in the treated wine which can be overcome by treating the sodium pectinate with an acidified ethanol solution prior to use in the method of the invention. However, this pre-treatment can result in a decrease in the calcium reduction activity which may be due to the protonated pectin being almost insoluble in wine so there is little interaction between the pectin and the wine calcium.

While pectin may be added to the beverage in liquid or solution form, it has been found that the powder form, preferably dry powder form of pectin is more effective at reducing calcium in high calcium (i.e, calcium levels of 70mg/l or above) acidic beverages such as white wine. Soluble pectin can form stable micellar structures and enhance turbidity of the beverage.

Examples of pectins that can be used as calcium reducing agents include LM pectins such as LMC pectins for example AF 702, CU-L 023/05, CU-L 024/05, TS 1334, AU901, TS 1333 and CU-L 025/05 or LMA pectins for example CF 020. In the LMC pectins, TS 1334, AU901 and TS 1333 are sugar-free and AU 901, TS 1333 and CU-L 025/05 are sodium pectinates. The details of these pectins are set out in Table 1. The calcium reducing agent may comprise one

or more pectins.

The pectin is preferably added in an amount that is effective to reduce calcium in the beverage. It has been found that the rate of calcium reduction is directly proportional to the pectin dosage rate.

When the amount of a component is expressed as a percentage, it will be appreciated that all the amounts of the components add up to 100%.

Any reference herein to wt/v or w/v refers to a weight for volume relationship, i.e. x% wt/v refers to x g of solid formulation in 100 ml of liquid.

Any reference herein to wt/wt or w/w refers to a weight for weight relationship, i.e. x% wt/wt refers to x g of solid formulation in 100 g of the solid formulation.

Generally when expressed herein the % solution refers to the amount of pectin in the solution and not the other components. For example a 5% pectin solution will have 5g of pectin in 100ml. Other components may be present.

It will be appreciated that the amount of pectin added will depend on the type of pectin used and the nature of the beverage requiring calcium reduction. The preferred amount of pectin in the total fluid volume of the beverage is 0.2-5g/L, more preferably 0.2-2g/L

The pectin used in the method of the invention is recyclable and may be reused after washing with an acid solution such as citric acid which reduces the production costs.

Beverages

The present invention finds its major utility in reducing calcium in alcoholic beverages, particularly those that are fermented such as beers, lagers, ales, cider, perry and wine including still and sparkling white and red wines. It may also find utility in alcopops and alcoholic fruit mixes.

Method

The pectin may be added at any stage in the production of the beverage.

By way of example, when the beverage is wine, the pectin may be added to the grape juice, after fermentation, before optimal bentonite treatment or after the wine has been produced or bottled.

As described above, the pectin is preferably added to the wine in powder form.

When sodium pectinates are used, they may be pretreated with an acidified ethanol solution so as to remove the sodium. While this reduces the sodium concentration in the treated wine, the calcium reduction activity may also be decreased.

The calcium reduction rate has a linear relationship with the pectin dosage rate which allows the wine calcium to be reduced to a specific target for instance <70mg/L.

The method of the present invention can be performed at room temperature (20°C) with a short mixing time such as 15 mins and a processing time such as 2 to 120h.

The pectin may be recycled after use in the method of the invention by washing with an acid solution such as acidified 60% ethanol solution which results in reduced production costs.

Heat stability tests and wine volatility measurements show that neither wine stability, flavour or impact on other ions is altered by the calcium reduction method of the invention.

## Description of the Drawings

In the Examples which follow, reference will be made to the accompanying drawings in which:

Fig. 1 is a graph showing the effects of calcium removal between pectin powder and solution. Either powder or solution is dispersed in wine as 1.0g/L and stored at 4°C for 3 days.

Fig. 2 is a graph showing the effect of storage temperature on wine calcium reduction. CU-L024/05 (1.0g/L) was used.

Fig. 3 is a graph showing the effect of storage time on wine calcium reduction. CU-L024/05 (1.0g/L) was used.

Fig. 4 is a graph showing the effect of extended mixing on wine calcium reduction. CU-L024/05 (1.0g/L) was used.

Fig. 5 is a graph showing pectin dose response on wine calcium reduction which was carried out at 20°C for 16hr. The primary Y axis showed an actual calcium concentration in tested wine.

Fig. 6 is a graph showing dose response between pectin addition and the changes on wine calcium. The calcium

reduction of two different Wines 250906 and 240506 were compared.

Fig. 7 is a graph showing a relationship between pectin dosage rate and calcium reduction rate from two different Wines 250906 and 240506.

Fig. 8 is a plot showing the effects of pectin addition on wine stability. Heat stability was carried out at 80°C for 6hr.

Fig. 9 is a graph showing a comparison of calcium reduction activity between fresh and recycled pectins. 2.0g/L CU-L024/05 was used.

Examples

The present invention will now be described with reference to the following non-limiting examples.

Materials and methods:

Two sparking wines (Wine 240506 and Wine 250906) used in the examples were supplied by Wolf Blass, Australia. Wine 240506 has a calcium concentration of 104mg/L and Wine 250906 has a calcium concentration of 82mg/L. Pectin samples with variable DE and calcium reactivity were either commercial products or test samples, were from Hebstreith & Fox (H & F), Germany and CP Kelco of USA. Other chemicals such as citric acid were purchased from commercial suppliers.

Various high calcium affinity pectins were used in both liquid and dry powder form.

*Preparation of 2.5% pectin solution:* 2.5g pectin sample was dispersed slowly into 100ml distilled water with a mechanic stirrer. 0.3g sodium metabisulfite (as preservative) was then mixed into the solution towards the end of preparation.

*Standard protocol for removing sodium from sodium pectinate*: 5.0g sodium pectinate was dispersed into 60ml 60% acidified ethanol containing 3.0ml 2.7M hydrogen chloride at 4°C and stirred for 30min. The supernatant was poured after settling for 5min and the treatment repeated using the same volume of ethanol solution. The pectin was then filtered and the solid was washed by 2x10ml 96% ethanol. The pectin was oven-dried at 60°C until a constant weight was obtained.

*Method for heat stability test*: About 30ml wine sample was filtered through a 0.45μm syringe filter (Sartorius). The filtered sample was heated at 80°C for 6h and then cooled down to 20°C prior to turbidity measurement.

Turbidity is measured by a Hach turbidimeter (2100AN) as nephelometry turbidity units (NTU). If the difference in the turbidity before and after heating test is less than or equal to 2NTU, then the wine was considered stable.

*Method for wine volatiles and metallic ions analysis:* A gas chromatograph equipped with temperature programming, mass spectrometer, capillary/splitless injector port system, headspace auto-sampler and BP21 capillary column (25m x 0.32mm x 0.25μ) was used for wine volatiles. Approximately 2g sodium chloride was added to headspace vials (10mL) and 3mL wine sample was injected into the headspace vials using cut-off measuring cylinder. The sample vial was then immediately crimped shut followed by injecting 10μL internal standard. The volatiles were finally measured by the GC/MS equipment with the internal standard.

Wine metallic ions are measured by directly injecting a 5μ wine sample in a HPLC (HP 1100) system containing a conductivity detector (Waters 432) and Universal Cation column (100 x 4.6mm x 7μ).

*General protocol for calcium reduction from wine:* Unless otherwise stated, either pectin solution or dry powder is thoroughly mixed in wine by a magnetic stirrer for 15min. The wine is then stored at 4°C for 3 days before the heat stability test.

*Pectin regeneration and reuse:* 5.0g used pectin was dispersed into 60ml 0.5M citric acid solution and stirred for 30min at 4°C. The washing was repeated and finally the pectin was filtered and oven-dried at 60°C for constant weight. The regenerated pectin was reused for the wine calcium reduction test.

*Data interpretation and statistics:*

Calcium reduction rate (ΔCa, %) is a portion of difference between pre- (pre-Ca) and post-treatment (post-Ca) against pre-calcium concentration:

$$\Delta Ca = \frac{\text{pre-Ca} - \text{post-Ca}}{\text{pre-Ca}} \times 100$$

The test in most cases is duplicated and average and standard deviation are used for the result evaluation.

**Example 1 - Comparison of calcium reduction by liquid and powder form pectin**

Two standardised LMC pectins (CU-L023/05 and CU-L024/05) were used in this Example. Each pectin was prepared as 2.5% solution using the standard method and dosed in the sparking wine (Wine 240506) at the final concentration of 0.2, 0.5 and 1.0g/L. Meanwhile, pectin powder was also dispersed separately into the wine but at a sightly higher dose rate - 0.5, 1.0 and 2.0g/L. The treatment was processed at 4°C for 3 days prior to calcium analysis. The results (Fig. 1) showed that dosing pectin powder removed more calcium from wine than its corresponding solution form. For instance, dosing 1.0g/L dry CU-L024/05 led to a 17.6% wine calcium reduction whereas only a 2.8% reduction was obtained when the same amount of solution was added. The addition of pectin solution also caused the formation of some low-gravity particles which floated in the wine even after 2 weeks of treatment. In contrast, the pectin powder settled firmly within several hours after the addition.

It is believed that gelling effect of LMC pectin depends on several factors - pectin concentration, presence of calcium ion, pH and total soluble solid in solution. Pectin in solution may be thoroughly dilute in wine and therefore incapable of forming a gel with wine calcium in the wine environment (low in pH and soluble solid). However, when pectin was dosed as a powder, local pectin concentration would be high enough to form a complex with wine calcium and subsequently drag some calcium out of the wine. Because pectin powder has a much better calcium reduction activity than its corresponding liquid form, it was used for the following examples.

**Example 2 - Effects of pectin DE, calcium sensitivity on calcium reduction**

Seven LMC pectins with variable DE and calcium reactivity were tested for wine calcium reduction as well as one LM amidated pectin. The detail of each pectin is summarised in Table 1 below. Each pectin was dispersed in Wine 240506 at 2.0g/L and stirred for 15min by a magnetic stirrer. The wine was then stored at 4°C for 3 days before the metallic ions assay. The results shown in Table 1 indicate that low calcium reactive pectin (i.e. AF702) has a minimal effect, if any, on calcium reduction. In contrast, some high calcium reactive pectins such as CU-L024/05 and TS1333 have a much stronger effect on calcium removal, which reduced about one third of the calcium from the wine using 2.0g/L pectin. If the sugar level in the standardised pectin is not considered, then the data in Table 1 suggests that pectin calcium reduction activity is negatively related to pectin DE, which means the lower the pectin DE, the higher calcium reduction activity.

When LMC pectin has a very low DE (i.e. <10%), in general its water solubility is very poor. In order to increase its solubility, most pectin suppliers normally convert those pectins to their sodium form (as AU901, TS1333 and CU-L023/05 shown in Table 1). This results in a high sodium concentration (increased by 600% in some cases) in the treated wine. Although sodium in those pectins can be at least partially washed out by acidified ethanol solution as shown in Example 7, it will increase the processing difficulties and the production cost. The data in Table 1 shows CU-L024/05 (DE = 25%) has a reasonable calcium reduction activity and only a negligible impact on other metallic ions.

Table 1

| Pectin | | | Ca | | Mg | | Na | | K | |
|---|---|---|---|---|---|---|---|---|---|---|
| | DE (%) | DA (%) | mg/L | diff. (%) | mg/L | diff. (%) | mg/L | diff. (%) | mg/L | diff. (%) |
| control | | | 90 | - | 92 | - | 34 | - | 282 | - |
| AF702 | 39 | N/A | 82 | -8.9 | 86 | -6.5 | 37 | 8.8 | 282 | 0.0 |
| CU-L 023/05 | 34 | N/A | 67 | -25.6 | 83 | -9.8 | 71 | 108.8 | 273 | -3.2 |
| TS1334 [a] | 32 | N/A | 72 | -20.0 | 87 | -5.4 | 38 | 11.8 | 281 | -0.4 |
| CU-L 024/05 | 25 | N/A | 59 | -34.4 | 79 | -14.1 | 41 | 20.6 | 266 | -5.7 |
| AU901 [a, b] | 10 | N/A | 56 | -37.8 | 82 | -10.9 | 61 | 79.4 | 279 | -1.1 |
| TS1333 [a, b] | 9 | N/A | 55 | -38.9 | 81 | -12.0 | 88 | 158.8 | 275 | -2.5 |
| CU-L 025/05 [b] | 7 | N/A | 59 | -34.4 | 79 | -14.1 | 240 | 605.9 | 263 | -6.7 |

(continued)

| Pectin | | | Ca | | Mg | | Na | | K | |
|---|---|---|---|---|---|---|---|---|---|---|
| | DE (%) | DA (%) | mg/L | diff. (%) | mg/L | diff. (%) | mg/L | diff. (%) | mg/L | diff. (%) |
| CF020 | 29 | 21 | 76 | -15.6 | 88 | -4.3 | 52 | 52.9 | 276 | -2.1 |
| 2.0g/L of each pectin was used. Diff.(%) is a differential between the treated wine and control (untreated wine - Wine 240506) sample. a: sugar-free pectin samples, b: sodium pectinate, DE: degree of esterification and DA: degree of amidation. | | | | | | | | | | |

**Example 3 - Effect of process conditions on calcium reduction**

Wine 240506 was used and the effects of temperature, storage time and mixing were investigated in this example.

_Temperature:_ Pectin CU-L024/05 (1.0g/L) was dispersed into the wine and stirred for 15min at 4°C. The wine was immediately divided equally into two sets after stirring. One set was kept at 4°C and another set left at 20°C for 3 days. The calcium reduction shown in Fig. 2 revealed that the set stored at 20°C seemed to have slightly better effect over the 4°C-set (ΔCa 20.7% *vs* 19.7%) but there was no statistical difference between the two. The following tests were therefore set up at 20°C because of its energy effectiveness.

_Storage time:_ A similar experiment was carried out to investigate the impact of storage time on wine calcium reduction. CU-L024/05 was dosed into wine at 1.0g/L. One set was stored at 20°C for 16hr whereas another set was kept for 3 days before analysis. Surprisingly calcium reduction rate after 16hr as shown in Fig. 3 was marginally better than one for 3 days (ΔCa 22.6% *vs* 19.7%). This is probably because longer storage time, such as 3 days led to more pectin being dissolved in the wine and consequently some calcium returning into the wine, especially at a higher storage temperature (i.e. 20°C).

_Extended mixing:_ In this experiment, the wine calcium reduction test was carried out at 20°C for 16 hr. One set was stirred for 15min and another set was extensively mixed for 3 hr before settlement. The result shown in Fig. 4 revealed that 15 min mixing was more efficient than the extended mixing. It is presumed that vigorous mixing enhanced pectin solubility and might also break the calcium-pectin complex. Consequently more calcium could remain in the wine.

**Example 4 - Relationship between pectin dosage rate and wine calcium reduction**

CU-L024/05 was dispersed into wine separately at the final concentrations of 0.2, 0.4, 0.6, 0.8, 1.0, 1.2, 1.4, 1.6, 1.8 and 2.0 g/L. Non-treated wine was used as control. The wine was stirred for 15min by a magnetic stirrer and then settled for 16 hr at 20°C. The results shown in Fig. 5 reveal that the wine calcium reduction rate was linear relative to pectin dosage rate in the range between 0 to 2.0g/L.

$$\Delta Ca\ (\%) = 17.6 \times g\ of\ pectin \quad (R^2 = 0.97)$$

A similar relationship was also found when other pectins were used. The highest pectin dosage rate used in this example was 2.0g/L because it can effectively reduce wine calcium from over 100mg/L to less than 70mg/L which is an acceptable level for most sparking wines.

**Example 5 - Repeatability of pectin addition on wine reduction**

Two sparking wines (Wine 240506 and Wine 250906) with different calcium concentrations (104 and 82mg/L, respectively) were used in this example. LMC pectin CU-L024/05 was also used and the dosage rate was between 0 to 2.0g/L as described in Fig. 5.

Wine calcium analysis results showed in Fig. 6 that although Wine 250906 contains 20mg/L less calcium compared to Wine 240506, its calcium reduction rate was still linear relative to the pectin dosage rate. About 29mg/L calcium was removed from Wine 250906 when 2.0g/L pectin was added which was close to 31mg/L obtained from Wine 240506.

Fig. 7 shows that the calcium reduction rate from Wine 240506 and Wine 250906 were almost identical. This suggests that calcium reduction is independent to the original wine calcium concentration, but is stoichiometrically related to the amount of added pectin.

**Example 6 - Influences on wine stability, flavour profile and wine ionics by pectin treatment**

Another key factor for wine treatment is to ascertain whether adding pectin could have any effect on the flavour profile as well as wine stability. Grape pectin can create pectin haze and consequently influence wine stability. The data shown in Fig. 8 revealed that the pectin-treated wine (Wine 240506) has slightly lower turbidity during the heat test compared to the control (non-treated). This suggests that addition of the modified LMC pectins (such as CU-L 024/05) at least has no negative effect on wine stability.

The impact of the pectin treatment on wine flavour was also investigated by analysing the wine volatile profiles. Table 2 below shows changes of wine esters, higher alcohols and fatty acids profiles between the pectin-treated wine and control (non-treated) wine. Wine 240506 was used. The overall total esters was slightly reduced (~9%) except phenylethyl acetate, which was reduced by one third. However phenylethyl acetate has such a low concentration in wine (0.06 mg/L), that this change on absolute amount is small, so the change may still be considered negligible. Change on higher alcohols caused by the pectin treatment was also found to be minimal as the difference between the pectin-treated and control was less than 10%. The pectin treatment led an increase of about 20% on octanoic acid.

Table 2: Comparison of wine flavour between the pectin-treated and control for Wine 240506. Amounts shown in mg/L. 2.0g/L CU-L024/05 was used.

| | | Control | CU-L024/05 | diff. (%) |
|---|---|---|---|---|
| | Ethyl acetate | 64.78 | 59.10 | -8.8 |
| | Isoamyl acetate | 0.10 | 0.10 | 0.0 |
| Esters | Ethyl hexanoate | 0.12 | 0.11 | -8.3 |
| | Ethyl octanote | 0.72 | 0.66 | -8.3 |
| | Phenylethyl acetate | 0.06 | 0.04 | -33.3 |
| | n-Propanol | 36.40 | 36.26 | -0.4 |
| Higher alcohols | Isobutanol | 0.68 | 0.74 | 8.8 |
| | Isoamyl alcohol | 88.34 | 83.40 | -5.6 |
| | Phenylethyl alcohol | 8.90 | 9.40 | 5.6 |
| | Hexanoic acid | 6.04 | 5.92 | -2.0 |
| Fatty acids | Octanoic acid | 9.42 | 11.34 | 20.4 |
| | Decanoic acid | 4.32 | 4.12 | -4.6 |

A full ionic analysis was carried out on Wine 250906 that was treated by 2.0g/L CU-L024/05 for 16h. The ionic results shown in Table 3 revealed that the pectin treatment has the most profound effect on calcium reduction which reduced by about 32% and followed by iron (19.1%), copper (14.3%) and magnesium (9.4%). Considering its trace level in wine, the change in copper could be negligible. Sodium level was slightly increased after the treatment, which was up by 7.5% compared to the control. Only minimal change was found in potassium level (0.5%) and nitrate (0.9) by the pectin treatment. No change was found in chloride and sulphate ions. Quality of the wine after the pectin treatment was judged for an inhouse taste panel. Although one tester in the taste panel stated that the treatment does have some impact on organoleptic qualities of the wine, overall wine flavour and ionic analysis results suggested that the identified flavour change might be due to changes of calcium and iron levels, or the additives in the pectin sample.

Table 3: Change in wine ions resulting from pectin treatment of Wine 250906. Metal ions were analysed using the AA method and the others were measured using the HPLC method.

| Ions | Control | Trial (2g/L) | Diff (%) |
|---|---|---|---|
| $Ca^{2+}$ | 82 | 56 | -31.7 |
| $Mg^{2+}$ | 96 | 87 | -9.4 |
| $Na^{+}$ | 53 | 57 | 7.5 |
| $K^{+}$ | 546 | 543 | -0.5 |
| $Cu^{2+}$ | 0.07 | 0.06 | -14.3 |

(continued)

| Ions | Control | Trial (2g/L) | Diff (%) |
|---|---|---|---|
| $Fe^{3+}$ | 89 | 72 | -19.1 |
| $Cl^{-}$ | 74 | 74 | 0.0 |
| $SO_4^{2-}$ | 226 | 226 | 0.0 |
| $NO_3^{-}$ | 106 | 107 | 0.9 |

**Example 7 - Effects of the regenerated pectin and acid washed pectinate on wine calcium reduction**

This example investigates whether recycled pectin after the first wine treatment would have a comparable calcium reduction activity. A used pectin was washed with 3N HCl acidified 60% ethanol solution using the process described above and reused for Wine 250906 treatment in a comparable condition. The results shown in Fig. 9 reveal that the recycled pectin was less effective for calcium reduction compared to the fresh pectin (ΔCa 26.9% vs.34.6 %). This is probably because the calcium which surrounds pectin has not been thoroughly removed by the standard washing protocol and therefore other washing process may need to be considered for complete removal. Probably for the same reason it was also observed that the recycled pectin was more difficult to dissolve in water than its fresh sibling.

As suggested by the results shown in Table 1, sodium-formed LMC pectin with very low DE has the highest calcium reduction activity but results in a significantly increased sodium content of the wine after the treatment. It was then determined whether converting the sodium-formed LMC pectins to their protonated form (-COOH) would reduce their original impact on wine sodium, but still retain their calcium reduction activity. TS1333 was washed by the acidified 60% ethanol solution using a standardised washing protocol. The washed pectin was then added to the wine at a concentration of 2.0g/L. Non-washed TS1333 was also dispersed separately in the wine as a control. The results set out in Table 4 showed there was a sharp drop in sodium level in the washed-pectin-treated-wine compared to the control. However, calcium reduction activity also dropped markedly after washing (ΔCa 25.6 % vs.38.9%). This may be due to the protonated pectin being almost insoluble in wine and therefore there is very little interaction between the pectin and wine calcium.

Table 4: Changes in wine metallic ions after treatment by sodium pectinate and its acidified form

| | Ca | | Mg | | Na | | K | |
|---|---|---|---|---|---|---|---|---|
| | mg/L | diff. (%) | mg/L | diff. (%) | mg/L | diff. (%) | mg/L | diff. (%) |
| Control | 90 | N/A | 92 | N/A | 34 | N/A | 282 | N/A |
| TS1333 | 55 | -38.9 | 81 | -11.96 | 88 | 158.82 | 275 | -2.48 |
| Washed TS1333 | 67 | -25.6 | 85 | -7.61 | 59 | 73.53 | 273 | -3.19 |

The Examples indicate that some powder LMC pectins can bind specifically with wine calcium and have little, if any, impact on other ions, wine flavour and stability. In general, the lower pectin DE, the higher the calcium reduction activity. Wine calcium reduction rate has an apparently linear relationship with pectin dosage rate which allows wine calcium to be reduced to an appropriate level (for instance, <70mg/L) by directly pectin addition(s). The treatment can be processed at near room temperature (20°C) with a short mixing (15min) and settlement time (16h). The examples also show some very encouraging potentials - for instance, it is possible to recycle and reuse pectins, which may significantly reduce the production cost.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

It will be apparent to the person skilled in the art that while the invention has been described in some detail for the purposes of clarity and understanding, various modifications and alterations to the embodiments and methods described herein may be made without departing from the scope of the inventive concept disclosed in this specification.

## Claims

1. Use of a powder form of pectin as an agent for reducing calcium in a beverage, wherein said powder form of pectin is added to the beverage and wherein the pectin is a low methyl ester or low methoxy (LM) pectin having a degree of esterification (DE) of 50% or less.

2. The use according to claim 1, in which the pectin is a low methyl ester or low methoxy (LM) pectin having a degree of esterification (DE) of 0 to 45% or 10 to 30%.

3. The use according to claim 2, in which the LM pectin is a low methyl ester (LMC) pectin or an amidated, low methyl ester (LMA) pectin.

4. The use according to claim 1, in which the pectin is standardised (sugar blended) pectin or an active (sugar-free) pectin.

5. The use according to claim 1, in which the amount of pectin added when the beverage is an acidic beverage having a calcium level of 70mg/l or above is 0.2-5g/L or 0.2-2g/L

6. The use according to claim 1, in which the pectin is recyclable and reused after washing with an acid solution.

7. The use according to claim 1, in which the beverage is an alcoholic beverage.

8. The use according to claim 1, in which the beverage is a fermented beverage.

9. The use according to claim 8, in which the fermented beverage is beer, lager, ale, cider, perry or wine.

10. The use according to claim 1, wherein the beverage is wine and the wine calcium is reduced to <70mg/L.

11. A method for reducing calcium in a beverage which comprises adding a powder form of pectin to the beverage, wherein the pectin is a low methyl ester or low methoxy (LM) pectin having a degree of esterification (DE) of 50% or less.

12. The method according to claim 11, in which the pectin is added at any stage in the production of the beverage.

13. The method according to claim 11, in which the processing time of the pectin is 2 to 120h.

14. The method according to claim 11, in which the pectin is recycled by washing with an acid solution.

15. The method according to claim 11, wherein the beverage is wine and the wine calcium is reduced to <70mg/L.

## Patentansprüche

1. Verwendung einer Pulverform von Pektin als Mittel zur Reduzierung von Calcium in einem Getränk, worin die Pulverform von Pektin zu dem Getränk zugesetzt wird und worin das Pektin ein niedrig Methylverestertes oder niedrig Methoxyliertes Pektin (LM) mit einem Veresterungsgrad (DE) von 50 % oder weniger ist.

2. Verwendung nach Anspruch 1, wobei das Pektin ein niedrig Methylverestertes oder niedrig Methoxyliertes (LM)-Pektin mit einem Veresterungsgrad (DE) von 0 bis 45 % oder 10 bis 30 % ist.

3. Verwendung nach Anspruch 2, wobei das LM Pektin ein niedrig Methylverestertes (LMC) Pektin oder ein amidiertes, niedrig Methylverestertes (LMA) Pektin ist.

4. Verwendung nach Anspruch 1, wobei das Pektin standardisiertes (mit Zucker vermischtes) Pektin oder ein aktives (Zucker-freies) Pektin ist.

5. Verwendung nach Anspruch 1, wobei die Menge an zugesetztem Pektin bei einem Getränk, das ein saures Getränk mit einem Calciumspiegel von 70 mg/l oder mehr ist, 0.2 - 5 g/l oder 0,2 - 2 g/l beträgt.

6. Verwendung nach Anspruch 1, wobei das Pektin recyclebar ist und nach Waschen mit einer sauren Lösung wiederverwertet wird.

7. Verwendung nach Anspruch 1, wobei das Getränk ein alkoholisches Getränk ist.

8. Verwendung nach Anspruch 1, wobei das Getränk ein fermentiertes Getränk ist.

9. Verwendung nach Anspruch 8, wobei das fermentierte Getränk Bier, Lager, Ale, Cidre, Birnenwein oder Wein ist.

10. Verwendung nach Anspruch 1, wobei das Getränk Wein ist und das Wein-Calcium auf < 70 mg/l reduziert wird.

11. Verfahren zur Reduzierung von Calcium in einem Getränk, welches umfasst, Zusetzen einer Pulverfom von Pektin zu dem Getränk, worin das Pektin ein niedrig Methylverestertes oder niedrig Methoxyliertes (LM) Pektin mit einem Veresterungsgrad (DE) von 50 % oder weniger ist.

12. Verfahren nach Anspruch 11, wobei das Pektin zu jeder Stufe der Produktion des Getränks zugesetzt wird.

13. Verfahren nach Anspruch 11, wobei die Verarbeitungszeit des Pektins 2 bis 120 Stunden ist.

14. Verfahren nach Anspruch 11, wobei das Pektin durch Waschen mit einer sauren Lösung recycelt wird.

15. Verfahren nach Anspruch 11, wobei das Getränk Wein ist und das Weincalcium auf < 70 mg/l reduziert wird.

## Revendications

1. Utilisation d'une forme pulvérulente de pectine en tant qu'agent pour la réduction du calcium dans une boisson, dans laquelle ladite forme pulvérulente de pectine est ajoutée à la boisson et dans laquelle la pectine est une pectine à faible teneur en méthylester ou à faible teneur en méthoxy (LM) ayant un degré d'estérification (DE) de 50 % ou moins.

2. Utilisation selon la revendication 1, dans laquelle la pectine est une pectine à faible teneur en méthylester ou à faible teneur en méthoxy (LM) ayant un degré d'estérification (DE) allant de 0 à 45 % ou de 10 à 30 %.

3. Utilisation selon la revendication 2, dans laquelle la pectine LM est une pectine à faible teneur en méthylester (LMC) ou une pectine amidée à faible teneur en méthylester (LMA).

4. Utilisation selon la revendication 1, dans laquelle la pectine est une pectine normalisée (mélangée à du sucre) ou une pectine active (sans sucre).

5. Utilisation selon la revendication 1, dans laquelle la quantité de pectine ajoutée lorsque la boisson est une boisson acide ayant un taux de calcium de 70 mg/l ou plus est de 0,2 à 5 g/l ou de 0,2 à 2 g/l.

6. Utilisation selon la revendication 1, dans laquelle la pectine est recyclable et réutilisée après lavage avec une solution acide.

7. Utilisation selon la revendication 1, dans laquelle la boisson est une boisson alcoolisée.

8. Utilisation selon la revendication 1, dans laquelle la boisson est une boisson fermentée.

9. Utilisation selon la revendication 8, dans laquelle la boisson fermentée est de la bière, de la bière blonde, de la bière ale, du cidre, du poiré ou du vin.

10. Utilisation selon la revendication 1, dans laquelle la boisson est du vin et le calcium du vin est réduit à < 70 mg/l.

11. Procédé de réduction du calcium dans une boisson qui comprend l'addition d'une forme pulvérulente de pectine à la boisson, dans lequel la pectine est une pectine à faible teneur en méthylester ou à faible teneur en méthoxy (LM) ayant un degré d'estérification (DE) de 50 % ou moins.

**12.** Procédé selon la revendication 11, dans lequel la pectine est ajoutée à une quelconque étape lors de l'élaboration de la boisson.

**13.** Procédé selon la revendication 11, dans lequel la durée de traitement de la pectine est de 2 à 120 h.

**14.** Procédé selon la revendication 11, dans lequel la pectine est recyclée par lavage avec une solution acide.

**15.** Procédé selon la revendication 11, dans lequel la boisson est du vin et le calcium du vin est réduit à < 70 mg/l.

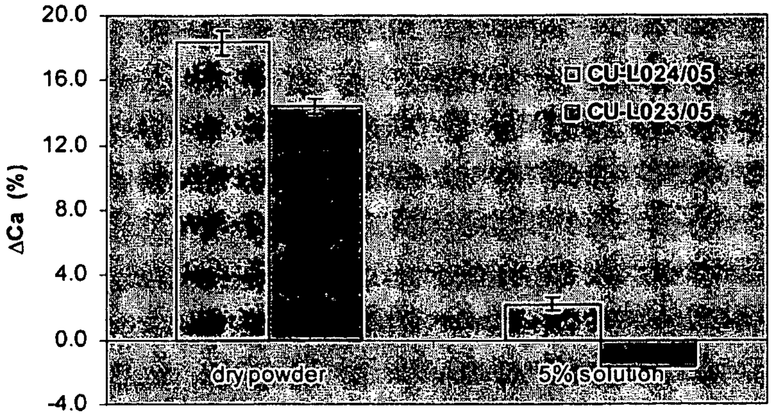
20.0
16.0
12.0
8.0
4.0
0.0
-4.0
ΔCa (%)
CU-L024/05
CU-L023/05
dry powder
5% solution

Fig. 1

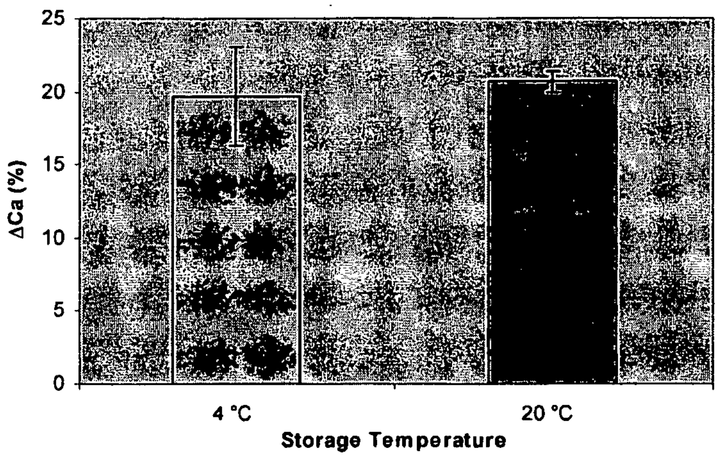


Fig. 2

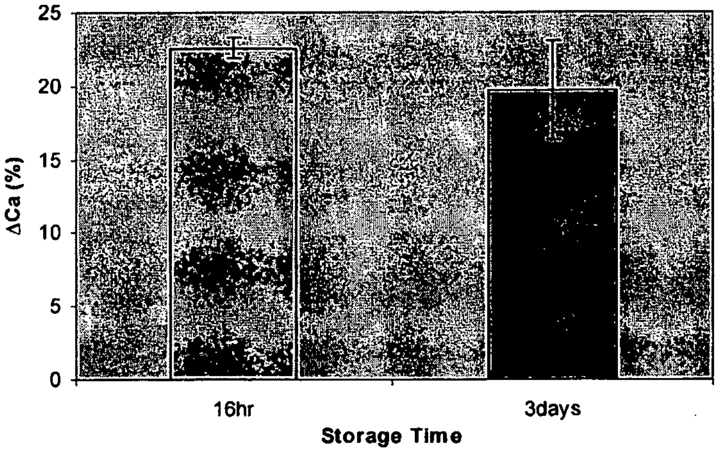


Fig. 3

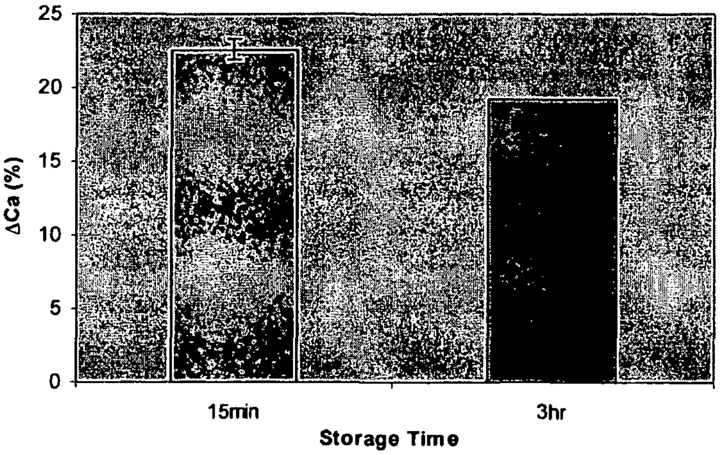


Fig. 4

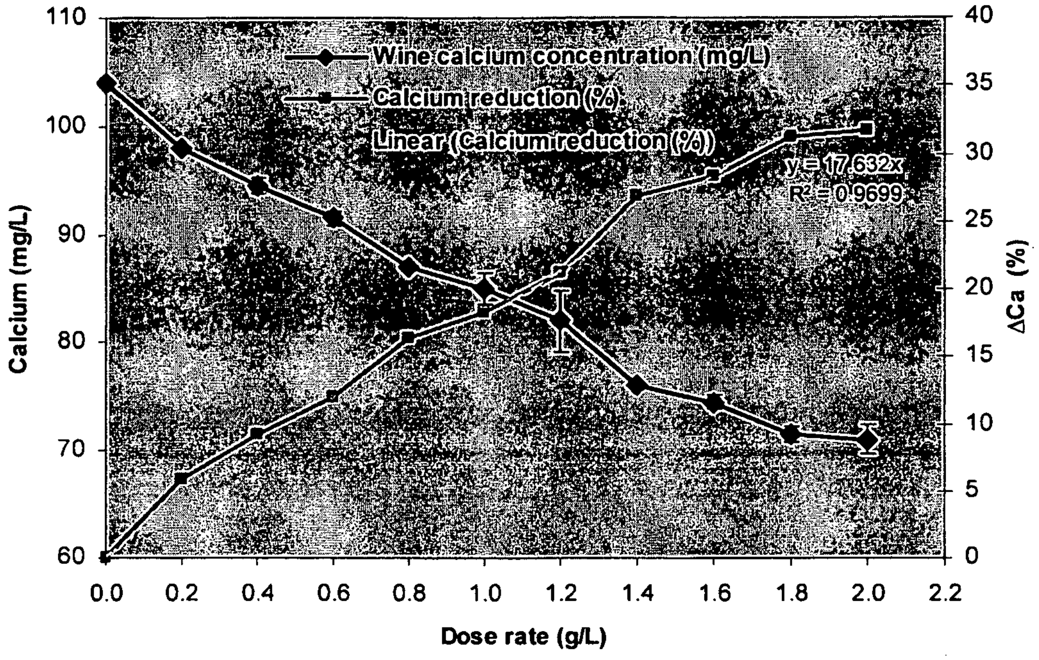
Wine calcium concentration (mg/L)
Calcium reduction (%)
Linear (Calcium reduction (%))
y = 17.632x
$R^2$ = 0.9699
110
100
90
80
70
60
Calcium (mg/L)
40
35
30
25
20
15
10
5
0
ΔCa (%)
0.0
0.2
0.4
0.6
0.8
1.0
1.2
1.4
1.6
1.8
2.0
2.2
Dose rate (g/L)

Fig. 5

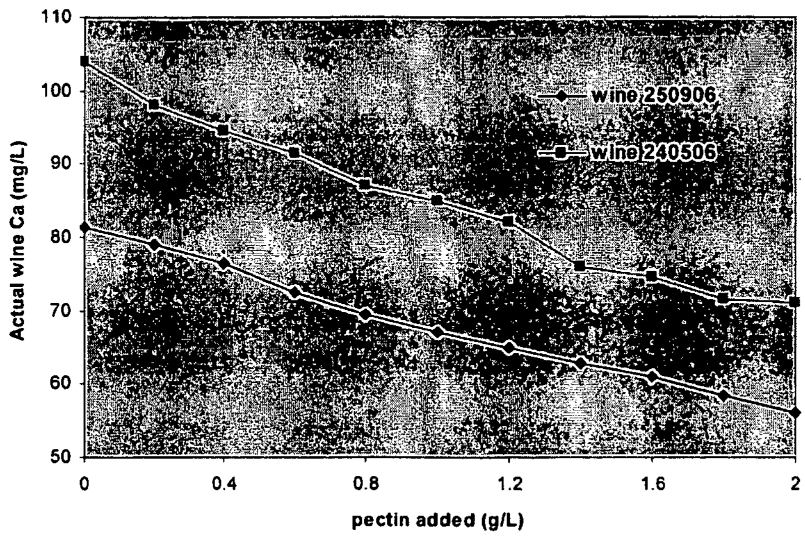
110
100
90
80
70
60
50
Actual wine Ca (mg/L)
0
0.4
0.8
1.2
1.6
2
pectin added (g/L)
wine 250906
wine 240506

Fig. 6

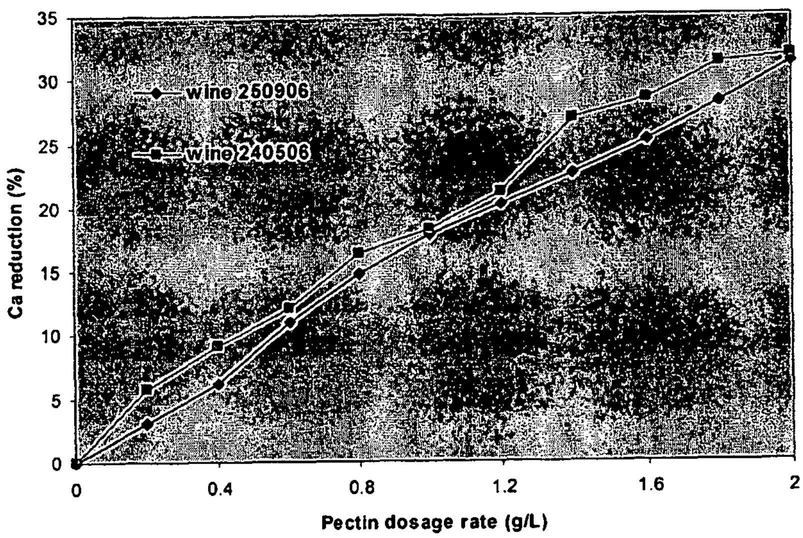
35
30
25
20
15
10
5
0
Ca reduction (%)
wine 250906
wine 240508
0
0.4
0.8
1.2
1.6
2
Pectin dosage rate (g/L)

Fig. 7

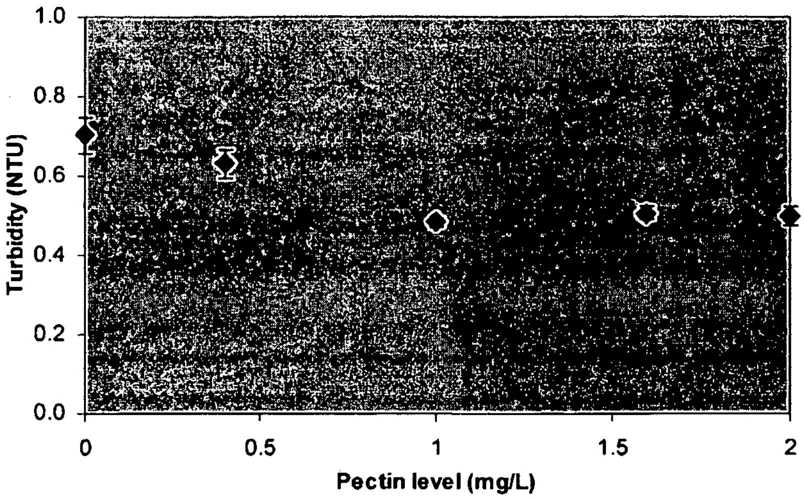


Fig. 8

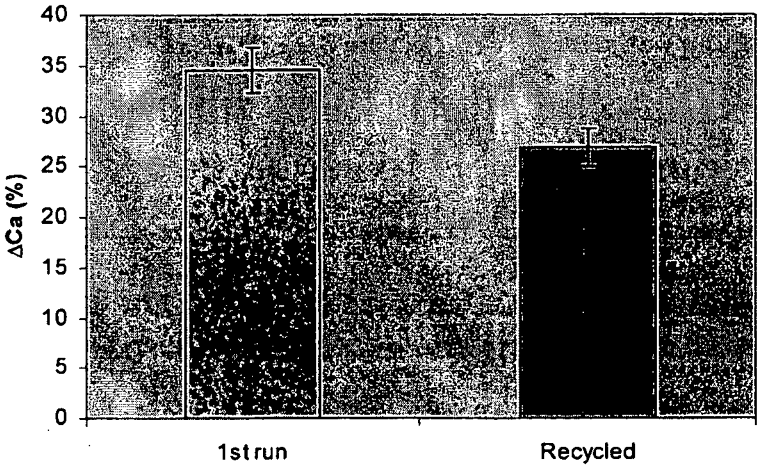


Fig. 9